# EUROPEAN PATENT SPECIFICATION

(11) **EP 4 305 925 B1**
(45) Date of publication and mention of the grant of the patent: **30.04.2025**
(21) Application number: 21945841.1
(22) Date of filing: 16.06.2021
(51) Int. Cl.: H04W 76/10, H04B 1/38, H04W 4/90, H04W 76/45, H04W 76/50, H04W 84/08, H04W 88/18, H04W 92/02

(54) **OPERATIONS CONTROL ROOM RADIO COMMUNICATIONS SYSTEM AND METHOD**
FUNKKOMMUNIKATIONSSYSTEM UND -VERFAHREN FÜR OPERATIONSSTEUERUNGSRAUM
SYSTÈME ET PROCÉDÉ DE COMMUNICATION RADIO POUR SALLE DE COMMANDE D'OPÉRATIONS

(43) Date of publication of application: 17.01.2024
(73) Proprietor: Dubai Police General Headquarters, Dubai (AE)
(72) Inventor: AL SHAMSI, Abdulla Mohammed Khalfan Al Yarwan, Dubai (AE); BIN GHALITA, Obaid Salem, Dubai (AE); AL MAZMI, Khalid Ahmad, Dubai (AE); AL AYEL, Mohammed Rashid, Dubai (AE); ALASMAR, Atig Al Shehi, Dubai (AE); ALAWADHI, Abdulrahman Saleh, Dubai (AE); MOHAMMED RIYAD, Hasan Ibrar, Dubai (AE); SALMAN, Tariq Abdulkarim, Dubai (AE); ALLUMAIHI, Mohammed Ahmed Mohammed, Dubai (AE); ALSHANABLEH, Jehad emil mufdi, Dubai (AE); AL SHARQI, Hessa Juma, Dubai (AE); ABDOLRAZAQ, Khaled, Dubai (AE)
(74) Representative: Potter Clarkson
(86) International application number: PCT/IB2021/055334
(87) International publication number: WO 2022/263888

(56) References cited:
- KR-B1- 101 027 805
- US-A1- 2017 289 350
- US-A1- 2017 289 350
- US-A1- 2018 357 073
- US-A1- 2018 359 811
- US-A1- 2019 074 892
- US-A1- 2020 119 756
- "MOTOTRBO System Planner", 18 November 2008 (2008-11-18), XP055149047, Retrieved from the Internet <URL:http://www.gouldelectronics.co.uk/product-downloads/SystemPlanner_Issue1_0.pdf> [retrieved on 20141027]

## Description

This invention relates to an operations control room radio communications system and a method of controlling operations control room radio communications and a corresponding computer program product.

The invention is expected to be advantageously applicable to emergency operations control rooms that integrate telephony and radio communications to control networked dispatch positions of public safety officers, for example police officers. Accordingly, such applications should particularly, but not exclusively, be borne in mind when considering this specification.

In this specification, the phrase "operational field" should be interpreted broadly to include all fields of public safety and emergency operations, including internal police agencies and outside organizations.

### Background of the invention

The inventors are familiar with console systems, for example Zetron systems, that digitally integrate telephony and analogue radio, call handling and monitoring and logging functions into a single operator interface. Initially, such dispatching systems were ordered for old obsoleted analogue base stations only.

A migration from analogue to digital communication system occurred (Tetra, Digital Mobile Radio DMR, and Marine VHF). Such systems support ports that are assignable to operators, telephones and dispatch radios, and provide for operator control and dispatch of field officers via the single operator interface. The single operator interface of such digital console system typically includes a host computer, video monitor, and desktop speakers for communicating with the radios of field officers via either wired or IP networks.
With regard to the field radios, known digital console systems of the kind provide for communication and integration with traditional dual band radios only. The advent of more recent radio communication standards, such as Terrestrial Trunked Radio (TETRA) and Digital Mobile Radio (DMR) have introduced the use of DMR, TETRA and Marine VHF radios in emergency operations communications networks. The inventors have had a lot of problems to interface the old Zetron systems to work with new digital radio systems. Accordingly, the inventors have used the old Zetron system to integrate with Tetra, Marine VHF, and Digital Mobile Radio Systems.

The inventors did not have backup support from the Zetron company; purchased the system through from IAL company which got bankrupt, thus leaving them without any technical support at all.

For Tetra mobile radio they could get some support to buy IRIM units to interface TMR radios for voice and SMS text messages to tetra handheld radios. However, for Tetra handheld radios, Motorola Digital radios, and Marine VHF radios there was no solution available at all. As a result, the existing systems were useless as Zetron offered a very expensive new system.

As a result, the inventors have identified a need for integrating, amongst others, digital radios with existing dual band radio control room communications systems. The present invention aims to provide a mechanism to satisfy such need.

### Prior art is

- "MOTOTRBO System Planner", 18 November 2008 (2008-11-18), XP055149047,
- US 2019/074892 A1, and
- US 2017/289350 A1.

### Summary of the invention

According to a first aspect of the invention there is provided an operations control room radio communications system which includes:
a first digital radio of a user in an operational field, for example a Tetra handheld radio;
a second digital radio of a user in an operational field, for example a Digital Mobile Radio (DMR);
one or more digital radio interface modules (DRIM),
each digital radio interface module comprising at least one digital to analogue radio conversion circuit, a digital radio interface, and an analogue radio interface, the at least one digital to analogue radio conversion circuit being in bidirectional data communication with the digital radio interface and the analogue radio interface; and
a host console computer having installed thereon a Digital Console Interface Management (DCIM) software application with some necessary settings according to the digital radio interface modules (DRIMs), the host console computer being connected to and in operative communication with the first digital radio and the second digital radio of the users in the operational field via one or more dual-band radio modules (BDBR) and via the one or more digital radio interface modules (DRIMs) for patching of radio communications to and from the first and second digital radios of the users in the operational fields by an operator of the Digital Console Interface Management (DCIM) software application, thereby operable to patch any communication network to another communication network depending on the situation at the spot.

The first and second digital radios may include any one or more of: a Terrestrial Trunked Radio (TETRA); a Trunked Mobile Radio (TMR); and a Digital Mobile Radio (DMR).

The host console computer may be connected to and in operative communication with the one or two dual-band radio modules (BDBR) via a digital switch, for example a Zetron 5020 for operative routing of the radio communications between the four wireless communication radios.

The system may include an analogue radio of a user in an operational field.

The system may include one or more analogue radio interface modules (ARIM), each analogue radio interface module comprising at least one analogue radio conversion circuit, an analogue radio input interface, and an analogue radio output interface, the at least one analogue radio conversion circuit being in bidirectional data communication with the analogue radio input interface and the analogue radio output interface.

The host console computer may be connected to and in operative communication with the analogue radio of the user in the operational field via the one or two dual-band radio modules (BDBR) and via the one or more analogue radio interface modules (ARIM) for patching of radio communications between any one or more of the first and second digital radios and the analogue radio by an operator of the Digital Console Interface Management (DCIM) software application with some necessary settings according to the digital radio interface modules (DRIMs).

The analogue radio may include any one or more of: an Ultra High Frequency (UHF); and a Very High Frequency (VHF) radio, for example a marine radio.

To this end, the digital switch may be operable to route the radio communications between the analogue radio and any one or more of the first and second digital radios.

The radio communications may include any one or more of: voice communications; audio communications; and text communications, such as Short Message Service (SMS) for tetra wireless communication radios.

The at least one digital to analogue radio conversion circuit of the one or more digital radio interface modules (DRIMs) may include a voltage regulator, transistor and a relay, such as a Reed Relay.

According to another aspect of the invention there is provided method of controlling operations control room radio communications comprising the step of:
receiving a first radio communications signal from a first digital radio and a second radio communications signal from a second digital radio at one or more digital radio interface modules (DRIMs), the one or more digital radio interface modules each comprising at least one digital to analogue radio conversion circuit, a digital radio interface, and an analogue radio interface, the at least one digital to analogue radio conversion circuit being in bidirectional data communication with the digital radio interface and the analogue radio interface;
transmitting the first and second radio communications signals to a host console computer having installed thereon a Digital Console Interface Management (DCIM) software application, the host console computer being connected to and in operative communication with the first digital radio and the second digital radio via one or more dual-band radio modules (BDBR) and via the one or more digital radio interface modules (DRIMs); and
patching any one of the first and second radio communications signals to and from the four digital radios by an operator of the Digital Console Interface Management (DCIM) software application.

Transmitting the four radio communications signals to the host console computer may include transmitting the radio communications signals to the host console computer via a digital switch.

The method may include receiving an analogue radio communications signal from an analogue radio at one or more analogue radio interface modules (ARIM), each analogue radio interface module comprising at least one analogue radio conversion circuit, an analogue radio input interface, and an analogue radio output interface, the at least one analogue radio conversion circuit being in bidirectional data communication with the analogue radio input interface and the analogue radio output interface.

The method may include transmitting the analogue radio communications signal to the host console computer via the one or more dual-band radio modules (BDBR).

The method may include patching the analogue radio communications signal to any one or more of the first and second digital radios by the operator of the Digital Console Interface Management (DCIM) software application.

Patching of the analogue radio communications signal may include transmitting a patched signal to the any one or more of the first and second digital radios via the digital switch.

According to yet another aspect of the invention, there is provided a computer program product for controlling operations control room radio communications, the computer program product comprising a non-transitory computer-readable medium having stored computer-readable program code, the computer-readable program code executable by processing circuit to perform the steps in the method of controlling operations control room radio communications as hereinbefore described.

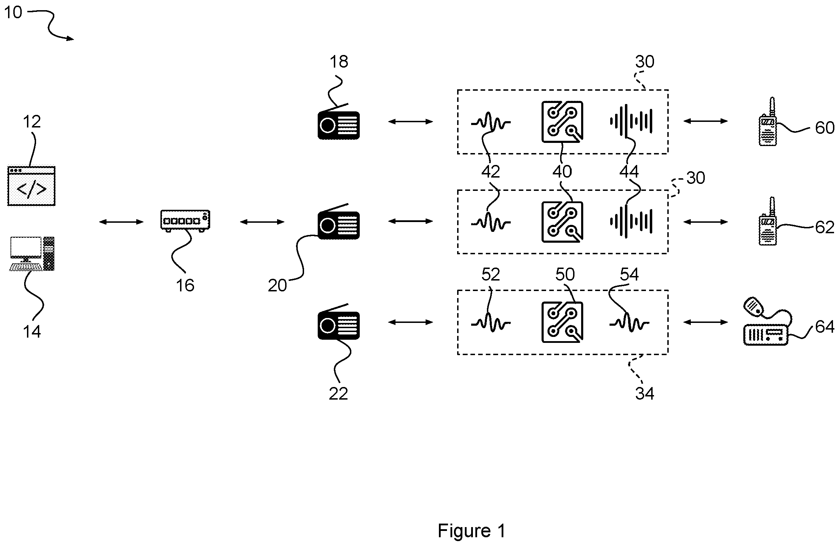

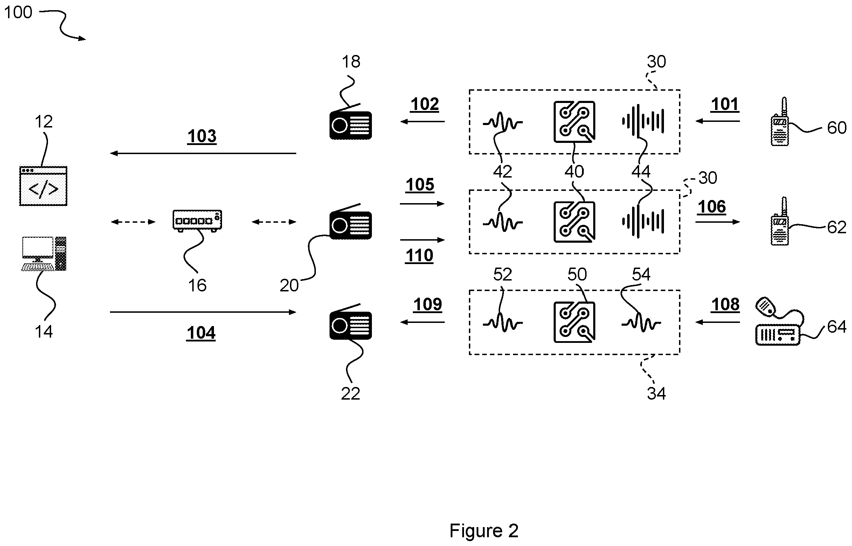

The invention is now described, by way of non-limiting example, with reference to the accompanying diagrammatic drawings. **In the following only the subject-matter of** **figures 1** **and** **2** **and their descriptions is according to the invention as defined in the claims. The rest of the description and figures (even if named embodiment(s) or invention) does not or does not fully correspond to the invention as defined in the claims and is therefore not according to the invention as defined in the claims but is considered as useful for understanding the invention.**

### Drawings

In the drawings,
Figure 1 illustrates, schematically, an operations control room radio communications system in accordance with one aspect of the invention.
Figure 2 illustrates, schematically, a method of controlling operations control room radio communications in accordance with another aspect of the invention.
Figure 3 shows a circuit diagram of a digital radio interface module in accordance with another aspect of the invention.

### Detailed Description of the Invention

With reference to figure 1, reference numeral (10) denotes, generally, an operations control room radio communications system according to one embodiment of the invention. The system (10) comprises a first digital radio (60) of a user in an operational field, for example a first digital radio of an ambulance; a second digital radio (62) of a user in an operational field, for example a radio in a police vehicle; and an analogue radio (64) of a user in an operational field, for example a marine radio. In this embodiment, the first digital radio (60) is a Trunked Mobile Radio (TMR), the second digital radio (62) is a Digital Mobile Radio (DMR), and the analogue radio (64) is a Very High Frequency (VHF) marine radio. The Zetron dispatcher can communicate all the radios of different wireless communication networks simultaneously.

The first digital radio (60) is connected to and in data communication with a digital radio interface module (DRIM) (30), the digital radio interface module (30) comprising a digital to analogue radio conversion circuit (40), a digital radio interface (44), and an analogue radio interface (42), the digital to analogue radio conversion circuit (40) being in bidirectional data communication with the digital radio interface (44) and the analogue radio interface (42).

Likewise, the second digital radio (62) is connected to and in data communication with a digital radio interface module (DRIM) (30), the digital radio interface module (30) comprising a digital to analogue radio conversion circuit (40), a digital radio interface (44), and an analogue radio interface (42), the digital to analogue radio conversion circuit (40) being in bidirectional data communication with the digital radio interface (44) and the analogue radio interface (42).

The system (10) includes a host console computer (14) having installed thereon a Digital Console Interface Management (DCIM) software application with some necessary settings according to the digital radio interface modules (DRIMs) (12), the host console computer (14) being connected to and in operative communication with the first digital radio (60) and the second digital radio (62) of the users in the operational field via dual-band radio modules (BDBR) (18) and (20) respectively, and via the digital radio interface modules (DRIMs) (30) for patching of radio communications to and from the first digital radio (60) and the second digital radio (62) by an operator of the Digital Console Interface Management (DCIM) software application (12).

In this embodiment, the host console computer (14) is connected to and in operative communication with the dual-band radio modules (BDBR) (18) and (20) via a digital switch (16) for operative routing of the radio communications between the first digital radio (60) and the second digital radio (62).

The analogue radio (64) is connected to and in communication with an analogue radio interface module (ARIM) (34) comprising an analogue radio conversion circuit (50), an analogue radio input interface (54) and an analogue radio output interface (52), the analogue radio interface module (ARIM) (34) being in bidirectional communication with the analogue radio input interface (54) and the analogue radio output interface (52).

The host console computer (14) is connected to and in operative communication with the analogue radio (64) of the user in the operational field via a like dual-band radio modules (BDBR) (22) and via the analogue radio interface module (ARIM) (34) for patching of radio communications between the first digital radio (60), the second digital radio (62), and the analogue radio (64) by the operator of the Digital Console Interface Management (DCIM) software application (12).

Further in this embodiment, the digital switch (16) is operable to route the radio communications between the analogue radio (64) and the first digital radio (60) and second digital radio (62).

With reference to figure 2, numeral (100) denotes, generally, a method of controlling operations control room radio communications in accordance with another embodiment of the invention, the method (100) being conducted at the system (10) of figure 1.

At a first step (101), a first radio communications signal is transmitted from the first digital radio (60) and received at the digital radio interface modules (DRIM) (30), the digital radio interface module (30) comprising the digital to analogue radio conversion circuit (40), digital radio interface (44), and analogue radio interface (42).

At step (102), the first radio communications signal is converted and transmitted to the host console computer (14) having installed thereon the Digital Console Interface Management (DCIM) software application (12) via the dual-band radio module (BDBR) (18) and the digital switch (16) at step (103).

Next at step (104), the first radio communications signal is patched to the second digital radio (62) by the operator of the Digital Console Interface Management (DCIM) software application (12) by transmitting the first radio communications signal to the second digital radio (62) via the digital switch (16), the dual-band radio module (BDBR) (20) at step (105), and the digital radio interface module (DRIM) (30) at step (106).

In keeping with the method (100) of figure 2 and according to another embodiment of the method: at step (108), an analogue radio communications signal is transmitted from the analogue radio (64) and received at the analogue radio interface modules (ARIM) (34) comprising the analogue radio conversion circuit (50), analogue radio input interface (54), and analogue radio output interface (52).

Next at step (109), the analogue radio communications signal is converted and transmitted to the host console computer (14) having installed thereon the Digital Console Interface Management (DCIM) software application (12) via the dual-band radio module (BDBR) (22) and the digital switch (16).

Next at step (110), the analogue radio communications signal is patched to the second digital radio (62) by the operator of the Digital Console Interface Management (DCIM) software application (12) by transmitting the analogue radio communications signal to the second digital radio (62) via the digital switch (16), the dual-band radio module (BDBR) (20) at step (110), and the digital radio interface module (DRIM) (30) at step (106).

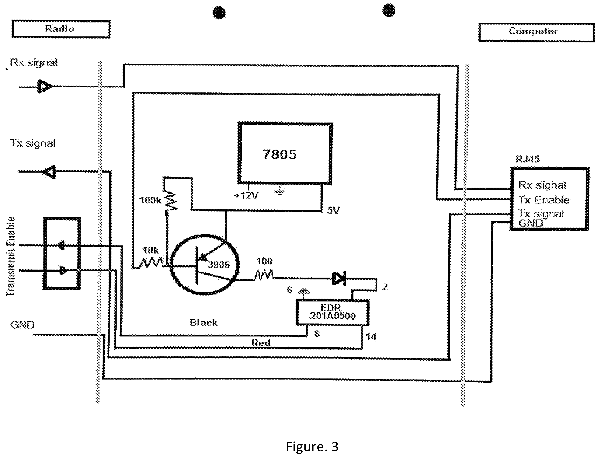

Turning to figure 3, numeral 200 shows an example circuit diagram of the digital radio interface module of figures 1 and 2. The circuit diagram is for a car kit interface and includes a voltage regulator (202), a relay (204), and a transistor (206).

Advantageously, for the use of emergency and crisis situations the inventors interfaced car-kits with Zetron to be used for guests from different organizations using different wireless communication networks, participating in emergency and crisis conditions are interfaced with our communication network on urgent basis just by installing one of their handheld radio on the above mentioned carkit without any programming and security issues. After the emergency and crisis conditions they are instantly isolated from our communication network by just lifting the handheld radio from the above mentioned carkit. Furthermore, testing of all the wireless equipment through patching, single mode communication/ multiline communication and installation work of all the wireless equipment, interface accessories, Zetron PC + 5020 DCIM with some necessary settings according to the digital radio interface modules (DRIMs) and audio routing through speaker's headsets.

## Claims

1. An operations control room radio communications system comprising:
a first digital radio of a user in an operational field;
a second digital radio of a user in an operational field;
one or more digital radio interface modules, DRIM, each digital radio interface module comprising at least one digital to analogue radio conversion circuit, a digital radio interface, and an analogue radio interface, the at least one digital to analogue radio conversion circuit being in bidirectional data communication with the digital radio interface and the analogue radio interface; and
a host console computer having installed thereon a Digital Console Interface Management, DCIM, software application with some necessary settings according to the digital radio interface modules, DRIMs, the host console computer being connected to and in operative communication with the first digital radio and the second digital radio of the users in the operational field via one or more dual-band radio modules, BDBR, and via the one or more digital radio interface modules, DRIMs, for patching of radio communications to and from the first and second digital radios of the users in the operational fields by an operator of the Digital Console Interface Management, DCIM, software application.

2. A system as claimed in claim 1 of which the first and second digital radios include any one or more of: a Terrestrial Trunked Radio, TETRA, a Trunked Mobile Radio, TMR, and a Digital Mobile Radio, DMR.

3. A system as claimed in claim 2 wherein the host console computer is connected to and in operative communication with the one or more dual-band radio modules, BDBR, via a digital switch for operative routing of the radio communications between the first and second digital radios.

4. A system as claimed in claim 3 which includes an analogue radio of a user in an operational field.

5. A system as claimed in claim 4 which includes one or more analogue radio interface modules, ARIM, each analogue radio interface module comprising at least one analogue radio conversion circuit, an analogue radio input interface, and an analogue radio output interface, the at least one analogue radio conversion circuit being in bidirectional data communication with the analogue radio input interface and the analogue radio output interface.

6. A system as claimed in claim 5 wherein the host console computer is connected to and in operative communication with the analogue radio of the user in the operational field via the one or more dual-band radio modules, BDBR, and via the one or more analogue radio interface modules, ARIM, for patching of radio communications between any one or more of the first and second digital radios and the analogue radio by an operator of the Digital Console Interface Management, DCIM, software application with some necessary settings according to the digital radio interface modules, DRIMs.

7. A system as claimed in claim 6 of which the analogue radio includes any one or more of: an Ultra High Frequency, UHF, and a Very High Frequency, VHF, radio.

8. A system as claimed in claim 7 wherein the digital switch is operable to route the radio communications between the analogue radio and any one or more of the first and second digital radios.

9. A system as claimed in claim 8 wherein the radio communications include any one or more of: voice communications; audio communications; and text communications, such as Short Message Service, SMS, communications for Tetra.

10. A system as claimed in claim 9 wherein the at least one digital to analogue radio conversion circuit of the one or more digital radio interface modules, DRIM, includes a voltage regulator, transistor and a relay.

11. A method of controlling operations control room radio communications comprising the step of:
receiving a first radio communications signal from a first digital radio and a second radio communications signal from a second digital radio at one or more digital radio interface modules, DRIMs, the one or more digital radio interface modules each comprising at least one digital to analogue radio conversion circuit, a digital radio interface, and an analogue radio interface, the at least one digital to analogue radio conversion circuit being in bidirectional data communication with the digital radio interface and the analogue radio interface;
transmitting the first and second radio communications signals to a host console computer having installed thereon a Digital Console Interface Management, DCIM, software application with some necessary settings according to the digital radio interface modules, DRIMs, the host console computer being connected to and in operative communication with the first digital radio and the second digital radio via one or more dual-band radio modules, BDBR, and via the one or more digital radio interface modules, DRIMs; and
patching any one of the first and second radio communications signals to and from the first and second digital radios by an operator of the Digital Console Interface Management, DCIM, software application with some necessary settings according to the digital radio interface modules DRIMs.

12. A method as claimed in claim 11 wherein transmitting the first and second radio communications signals to the host console computer includes transmitting the radio communications signals to the host console computer via a digital switch.

13. A method as claimed in claim 11 or claim 12 which includes receiving an analogue radio communications signal from an analogue radio at one or more analogue radio interface modules, ARIM, each analogue radio interface module comprising at least one analogue radio conversion circuit, an analogue radio input interface, and an analogue radio output interface, the at least one analogue radio conversion circuit being in bidirectional data communication with the analogue radio input interface and the analogue radio output interface.

14. A method as claimed in claim 13 which includes transmitting the analogue radio communications signal to the host console computer via the one or more dual-band radio modules, BDBR.

15. A method as claimed in claim 14 which includes patching the analogue radio communications signal to any one or more of the first and second digital radios by the operator of the Digital Console Interface Management, DCIM, software application with some necessary settings according to the digital radio interface modules, DRIMs.

16. A method as claimed in claim 15 wherein patching of the analogue radio communications signal includes transmitting a patched signal to the any one or more of the first and second digital radios via the digital switch.

17. A computer program product for controlling operations control room radio communications, the computer program product comprising a non-transitory computer-readable medium having stored computer-readable program code, the computer-readable program code executable by processing circuit to perform the steps in the method of:
receiving a first radio communications signal from a first digital radio and a second radio communications signal from a second digital radio at one or more digital radio interface modules, DRIMs, the one or more digital radio interface modules each comprising at least one digital to analogue radio conversion circuit, a digital radio interface, and an analogue radio interface, the at least one digital to analogue radio conversion circuit being in bidirectional data communication with the digital radio interface and the analogue radio interface;
transmitting the first and second radio communications signals to a host console computer having installed thereon a Digital Console Interface Management, DCIM, software application with some necessary settings according to the digital radio interface modules, DRIMs, the host console computer being connected to and in operative communication with the first digital radio and the second digital radio via one or more dual-band radio modules, BDBR, and via the one or more digital radio interface modules, DRIMs; and
patching any one of the first and second radio communications signals to and from the first and second digital radios by an operator of the Digital Console Interface Management, DCIM, software application.

## Patentansprüche

1. Einsatzsteuerungsraum-Funkkommunikationssystem für einen Einsatzsteuerungsraum, umfassend:
ein erstes digitales Funkgerät eines Benutzers in einem Einsatzgebiet;
ein zweites digitales Funkgerät eines Benutzers in einem Einsatzgebiet;
ein oder mehrere digitale Funkschnittstellenmodule, DRIM, wobei jedes digitale Funkschnittstellenmodul mindestens eine Digital-Analog-Funkumwandlungsschaltung, eine digitale Funkschnittstelle und eine analoge Funkschnittstelle umfasst, wobei die mindestens eine Digital-Analog-Funkumwandlungsschaltung in bidirektionaler Datenkommunikation mit der digitalen Funkschnittstelle und der analogen Funkschnittstelle steht; und
einen Hostkonsolencomputer, auf dem eine Softwareanwendung für die digitale Konsolenschnittstellenverwaltung, DCIM, mit einigen erforderlichen Einstellungen entsprechend den digitalen Funkschnittstellenmodulen, DRIMs, installiert ist, wobei der Hostkonsolencomputer über ein oder mehrere Dualband-Funkmodule, BDBR, und über die ein oder mehrere digitalen Funkschnittstellenmodule, DRIMs, mit dem ersten digitalen Funkgerät und dem zweiten digitalen Funkgerät der Benutzer im Einsatzfeld zum Patchen von Funkkommunikationen zu und von dem ersten und zweiten digitalen Funkgerät der Benutzer in den Einsatzfeldern durch einen Bediener der Softwareanwendung für die digitale Konsolenschnittstellenverwaltung, DCIM, verbunden ist und in operativer Kommunikation mit diesen steht.

2. System nach Anspruch 1, bei dem das erste und das zweite digitale Funkgerät eines oder mehrere eines terrestrischen Bündelfunkgeräts, TETRA, eines Bündelfunkgeräts, TMR, und eines digitalen Mobilfunkgerät, DMR, umfassen.

3. System nach Anspruch 2, wobei der Host-Konsolencomputer über einen digitalen Schalter mit einem oder mehreren Dualband-Funkmodulen, BDBR, verbunden ist und in operativer Kommunikation mit diesen steht, um die Funkkommunikation zwischen dem ersten und dem zweiten digitalen Funkgerät operativ zu leiten.

4. System nach Anspruch 3, das ein analoges Funkgerät eines Benutzers in einem Einsatzgebiet umfasst.

5. System nach Anspruch 4, das ein oder mehrere analoge Funkschnittstellenmodule, ARIM, umfasst, wobei jedes analoge Funkschnittstellenmodul mindestens eine analoge Funkumwandlungsschaltung, eine analoge Funkeingangsschnittstelle und eine analoge Funkausgangsschnittstelle umfasst und die mindestens eine analoge Funkumwandlungsschaltung in bidirektionaler Datenkommunikation mit der analogen Funkeingangsschnittstelle und der analogen Funkausgangsschnittstelle steht.

6. System nach Anspruch 5, wobei der Host-Konsolencomputer über ein oder mehrere Dualband-Funkmodule, BDBR, und über ein oder mehrere analoge Funkschnittstellenmodule, ARIM, mit dem analogen Funkgerät des Benutzers im Einsatzgebiet zum Patchen von Funkkommunikationen zwischen einem oder mehreren der ersten und zweiten digitalen Funkgeräte und dem analogen Funkgerät durch einen Bediener der Softwareanwendung für die digitale Konsolenschnittstellenverwaltung, DCIM, mit einigen notwendigen Einstellungen gemäß den digitalen Funkschnittstellenmodulen, DRIMs, verbunden ist und in operativer Kommunikation mit diesen steht.

7. System nach Anspruch 6, bei dem das analoge Funkgerät eines oder mehrere eines Ultrahochfrequenz-Funkgeräts, UHF, und eines Hochfrequenz-Funkgeräts, VHF, umfasst.

8. System nach Anspruch 7, bei dem der digitale Schalter die Funkkommunikation zwischen dem analogen Funkgerät und einem oder mehreren der ersten und zweiten digitalen Funkgeräte weiterleiten kann.

9. System nach Anspruch 8, bei dem die Funkkommunikation eines oder mehrere von Sprachkommunikation; Audiokommunikation; und Textkommunikation, wie Kurznachrichtendienst-SMS-Kommunikation für Tetra umfasst.

10. System nach Anspruch 9, bei dem die mindestens eine Digital-Analog-Funkumwandlungsschaltung des einen oder der mehreren digitalen Funkschnittstellenmodule, DRIM, einen Spannungsregler, einen Transistor und ein Relais umfasst.

11. Verfahren zur Steuerung der Einsatzsteuerungsraum-Funkkommunikation, das die folgenden Schritte umfasst:
Empfangen eines ersten Funkkommunikationssignals von einem ersten digitalen Funkgerät und eines zweiten Funkkommunikationssignals von einem zweiten digitalen Funkgerät an einem oder mehreren digitalen Funkschnittstellenmodulen, DRIMs, wobei die ein oder mehreren digitalen Funkschnittstellenmodule jeweils mindestens eine Digital-Analog-Funkumwandlungsschaltung, eine digitale Funkschnittstelle und eine analoge Funkschnittstelle umfassen, wobei die mindestens eine Digital-Analog-Funkumwandlungsschaltung in bidirektionaler Datenkommunikation mit der digitalen Funkschnittstelle und der analogen Funkschnittstelle steht;
Übertragen der ersten und zweiten Funkkommunikationssignale an einen Host-Konsolencomputer, auf dem eine Softwareanwendung für die digitale Konsolenschnittstellenverwaltung, DCIM, mit einigen erforderlichen Einstellungen entsprechend den digitalen Funkschnittstellenmodulen, DRIMs, installiert ist, wobei der Host-Konsolencomputer über ein oder mehrere Dualband-Funkmodule, BDBR, und über die ein oder mehrere digitalen Funkschnittstellenmodule, DRIMs, mit dem ersten digitalen Funkgerät und dem zweiten digitalen Funkgerät verbunden ist und mit diesen in operativer Kommunikation steht; und
Patchen eines beliebigen der ersten und zweiten Funkkommunikationssignale zu und von dem ersten und zweiten digitalen Funkgerät durch einen Bediener der Softwareanwendung für die digitale Konsolenschnittstellenverwaltung, DCIM, mit einigen erforderlichen Einstellungen gemäß den digitalen Funkschnittstellenmodulen, DRIMs.

12. Verfahren nach Anspruch 11, wobei das Übertragen des ersten und zweiten Funkkommunikationssignals an den Host-Konsolencomputer das Übertragen der Funkkommunikationssignale an den Host-Konsolencomputer über einen digitalen Schalter umfasst.

13. Verfahren nach Anspruch 11 oder Anspruch 12, das das Empfangen eines analogen Funkkommunikationssignals von einem analogen Funkgerät an einem oder mehreren analogen Funkschnittstellenmodulen, ARIM, umfasst, wobei jedes analoge Funkschnittstellenmodul mindestens eine analoge Funkumwandlungsschaltung, eine analoge Funkeingangsschnittstelle und eine analoge Funkausgangsschnittstelle umfasst und die mindestens eine analoge Funkumwandlungsschaltung in bidirektionaler Datenkommunikation mit der analogen Funkeingangsschnittstelle und der analogen Funkausgangsschnittstelle steht.

14. Verfahren nach Anspruch 13, das das Übertragen des analogen Funkkommunikationssignals an den Host-Konsolencomputer über ein oder mehrere Dualband-Funkmodule, BDBR, umfasst.

15. Verfahren nach Anspruch 14, das das Patchen des analogen Funkkommunikationssignals an eines oder mehrere der ersten und zweiten digitalen Funkgeräte durch den Bediener der Softwareanwendung für die digitale Konsolenschnittstellenverwaltung, DCIM, mit einigen notwendigen Einstellungen gemäß den digitalen Funkschnittstellenmodulen, DRIMs, umfasst.

16. Verfahren nach Anspruch 15, wobei das Patchen des analogen Funkkommunikationssignals das Übertragen eines gepatchten Signals an eines oder mehrere der ersten und zweiten digitalen Funkgeräte über den digitalen Schalter umfasst.

17. Computerprogrammprodukt zur Steuerung der Einsatzsteuerungsraum-Funkkommunikation, wobei das Computerprogrammprodukt ein nicht flüchtiges computerlesbares Medium mit gespeichertem computerlesbarem Programmcode umfasst, wobei der computerlesbare Programmcode durch eine Verarbeitungsschaltung ausführbar ist, um die Schritte in dem folgenden Verfahren auszuführen:
Empfangen eines ersten Funkkommunikationssignals von einem ersten digitalen Funkgerät und eines zweiten Funkkommunikationssignals von einem zweiten digitalen Funkgerät an einem oder mehreren digitalen Funkschnittstellenmodulen, DRIMs, wobei die ein oder mehreren digitalen Funkschnittstellenmodule jeweils mindestens eine Digital-Analog-Funkumwandlungsschaltung, eine digitale Funkschnittstelle und eine analoge Funkschnittstelle umfassen, wobei die mindestens eine Digital-Analog-Funkumwandlungsschaltung in bidirektionaler Datenkommunikation mit der digitalen Funkschnittstelle und der analogen Funkschnittstelle steht;
Übertragen der ersten und zweiten Funkkommunikationssignale an einen Host-Konsolencomputer, auf dem eine Softwareanwendung für die digitale Konsolenschnittstellenverwaltung, DCIM, mit einigen erforderlichen Einstellungen gemäß den digitalen Funkschnittstellenmodulen, DRIMs, installiert ist, wobei der Host-Konsolencomputer über ein oder mehrere Dualband-Funkmodule, BDBR, und über die ein oder mehrere digitale Funkschnittstellenmodule, DRIMs, mit dem ersten digitalen Funkgerät und dem zweiten digitalen Funkgerät verbunden ist und mit diesen in operativer Kommunikation steht; und
Patching eines beliebigen der ersten und zweiten Funkkommunikationssignale zu und von dem ersten und zweiten digitalen Funkgerät durch einen Bediener der Softwareanwendung für die digitale Konsolenschnittstellenverwaltung, DCIM.

## Revendications

1. Système de communication radio de salle de contrôle d'opérations comprenant :
une première radio numérique d'un utilisateur dans un champ opérationnel ;
une seconde radio numérique d'un utilisateur dans un champ opérationnel ;
un ou plusieurs modules d'interface radio numérique, DRIM, chaque module d'interface radio numérique comprenant au moins un circuit de conversion radio numérique-analogique, une interface radio numérique et une interface radio analogique, l'au moins un circuit de conversion radio numérique-analogique étant en communication bidirectionnelle de données avec l'interface radio numérique et l'interface radio analogique ; et
un ordinateur de console hôte sur lequel est installée une application logicielle d'interface de gestion de console numérique, DCIM, avec certains réglages nécessaires selon les modules d'interface radio numérique, DRIM, l'ordinateur de console hôte étant connecté à et en communication opérationnelle avec la première radio numérique et la seconde radio numérique des utilisateurs dans le champ opérationnel par l'intermédiaire d'un ou plusieurs modules radio à double bande, BDBR, et par l'intermédiaire du ou des modules d'interface radio numérique, DRIM, pour l'adaptation des communications radio vers et depuis les première et seconde radios numériques des utilisateurs dans les champs opérationnels par un opérateur de l'application logicielle d'interface de gestion de console numérique, DCIM.

2. Système selon la revendication 1, dans lequel la première et la seconde radio numériques comportent l'une quelconque ou plusieurs des radios suivantes : une radio terrestre à ressources partagées, TETRA, une radio mobile à ressources partagées, TMR, et une radio mobile numérique, DMR.

3. Système selon la revendication 2, dans lequel l'ordinateur de console hôte est connecté à et en communication opérationnelle avec le ou les modules radio à double bande, BDBR, par l'intermédiaire d'un commutateur numérique pour le routage opérationnel des communications radio entre la première et la seconde radio numérique.

4. Système selon la revendication 3 qui comporte une radio analogique d'un utilisateur dans un champ opérationnel.

5. Système selon la revendication 4 qui comporte un ou plusieurs modules d'interface radios analogiques, ARIM, chaque module d'interface radio analogique comprenant au moins un circuit de conversion radio analogique, une interface d'entrée radio analogique et une interface de sortie radio analogique, l'au moins un circuit de conversion radio analogique étant en communication bidirectionnelle de données avec l'interface d'entrée radio analogique et l'interface de sortie radio analogique.

6. Système selon la revendication 5, dans lequel l'ordinateur de console hôte est connecté à et en communication opérationnelle avec la radio analogique de l'utilisateur dans le champ opérationnel par l'intermédiaire du ou des modules radio à double bande, BDBR, et par l'intermédiaire du ou des modules d'interface radio analogique, ARIM, pour l'adaptation des communications radio entre l'une quelconque ou plusieurs des première et seconde radios numériques et la radio analogique par un opérateur de l'application logicielle de gestion d'interface de console numérique, DCIM, avec certains réglages nécessaires selon les modules d'interface radio numérique, DRIM.

7. Système selon la revendication 6, dans lequel la radio analogique comporte l'un quelconque ou plusieurs des éléments suivants : une radio à ultra-haute fréquence, UHF et une radio à très haute fréquence, VHF.

8. Système selon la revendication 7, dans lequel le commutateur numérique est utilisable pour acheminer les communications radio entre la radio analogique et l'une quelconque ou plusieurs des première et seconde radios numériques.

9. Système selon la revendication 8, dans lequel les communications radio comportent l'une quelconque ou plusieurs des éléments suivants : des communications vocales, des communications audios ; et des communications textuelles, telles que le service de messages courts, SMS, des communications pour Tétra.

10. Système selon la revendication 9, dans lequel l'au moins un circuit de conversion radio numérique-analogique du ou des modules d'interface radio numérique, DRIM, comporte un régulateur de tension, un transistor et un relais.

11. Procédé de contrôle des communications radio de la salle de contrôle des opérations comprenant l'étape consistant à :
la réception d'un premier signal de radiocommunication d'une première radio numérique et un second signal de radiocommunication d'une seconde radio numérique au niveau d'un ou de plusieurs modules d'interface radio numérique, DRIM, le ou les modules d'interface radios numériques comprenant chacun au moins un circuit de conversion radio numérique-analogique, une interface radio numérique et une interface radio analogique, l'au moins un circuit de conversion radio numérique-analogique étant en communication bidirectionnelle de données avec l'interface radio numérique et l'interface radio analogique ;
la transmission des premier et second signaux de communication radio à un ordinateur de console hôte sur lequel est installée une application logicielle d'interface de gestion de console numérique, DCIM, avec certains réglages nécessaires selon les modules d'interface radio numérique, DRIM, l'ordinateur de console hôte étant connecté à et en communication opérationnelle avec la première radio numérique et la seconde radio numérique par l'intermédiaire d'un ou plusieurs modules radio à double bande, BDBR, et par l'intermédiaire d'un ou plusieurs modules d'interface radio numérique, DRIM ; et
l'adaptation de l'une quelconque parmi les premier et second signaux de communication radio vers et depuis les première et seconde radios numériques par un opérateur de l'application logicielle d'interface de gestion de console numérique, DCIM, avec certains réglages nécessaires selon les modules d'interface radio numérique, DRIM.

12. Procédé selon la revendication 11, dans lequel la transmission des premier et second signaux de communication radio à l'ordinateur de console hôte comporte la transmission des signaux de communication radio à l'ordinateur de console hôte par l'intermédiaire d'un commutateur numérique.

13. Procédé selon la revendication 11 ou la revendication 12, qui comporte la réception d'un signal de communication radio analogique provenant d'une radio analogique au niveau d'un ou plusieurs modules d'interface radio analogique, ARIM, chaque module d'interface radio analogique comprenant au moins un circuit de conversion radio analogique, une interface d'entrée radio analogique et une interface de sortie radio analogique, l'au moins un circuit de conversion radio analogique étant en communication bidirectionnelle de données avec l'interface d'entrée radio analogique et l'interface de sortie radio analogique.

14. Procédé selon la revendication 13, qui comporte la transmission du signal de communication radio analogique à l'ordinateur de la console hôte par l'intermédiaire du ou des modules radio à double bande, BDBR.

15. Procédé selon la revendication 14, qui comporte l'adaptation du signal de communication radio analogique à l'une quelconque ou plusieurs parmi les première et seconde radios numériques par l'opérateur de l'application logicielle de gestion de l'interface de console numérique, DCIM, avec quelques réglages nécessaires selon les modules d'interface radio numérique, DRIM.

16. Procédé selon la revendication 15, dans lequel l'adaptation du signal de communication radio analogique comprend la transmission d'un signal adapté à l'une quelconque ou plusieurs des première et seconde radios numériques par l'intermédiaire du commutateur numérique.

17. Produit de programme informatique permettant le contrôle des communications radio de la salle de contrôle des opérations, le produit de programme informatique comprenant un support non transitoire lisible par ordinateur ayant stocké un code de programme lisible par ordinateur, le code de programme lisible par ordinateur exécutable par le circuit de traitement pour effectuer les étapes du procédé suivantes :
la réception d'un premier signal de radiocommunication d'une première radio numérique et un second signal de radiocommunication d'une seconde radio numérique au niveau d'un ou de plusieurs modules d'interface radio numérique, DRIM, le ou les modules d'interface radios numériques comprenant chacun au moins un circuit de conversion radio numérique-analogique, une interface radio numérique et une interface radio analogique, l'au moins un circuit de conversion radio numérique-analogique étant en communication bidirectionnelle de données avec l'interface radio numérique et l'interface radio analogique ;
la transmission des premier et second signaux de communication radio à un ordinateur de console hôte sur lequel est installée une application logicielle d'interface de gestion de console numérique, DCIM, avec certains réglages nécessaires selon les modules d'interface radio numérique, DRIM, l'ordinateur de console d'hôte étant connecté à et en communication opérationnelle avec la première radio numérique et la seconde radio numérique par l'intermédiaire d'un ou plusieurs modules radio à double bande, BDBR, et par l'intermédiaire d'un ou plusieurs modules d'interface radio numérique, DRIM ; et
l'adaptation de l'un quelconque parmi les premier et second signaux de communication radio vers et depuis les première et seconde radios numériques par un opérateur de l'application logicielle d'interface de gestion de console numérique, DCIM.
